# EUROPÄISCHE PATENTSCHRIFT

(11) **EP 1 642 018 B1**
(45) Veröffentlichungstag und Bekanntmachung des Hinweises auf die Patenterteilung: **24.01.2007**
(21) Anmeldenummer: 04739663.5
(22) Anmeldetag: 07.06.2004
(51) Int. Cl.: F02M 21/02, F02M 51/06, F02M 65/00

(54) **VENTILVORRICHTUNG UND VERFAHREN ZUM EINBLASEN VON GASFÖRMIGEM KRAFTSTOFF**
VALVE DEVICE AND METHOD FOR INJECTING A GASEOUS FUEL
SYSTEME DE SOUPAPE ET PROCEDE POUR INJECTER DU CARBURANT SOUS FORME GAZEUSE

(30) Priorität: 11.06.2003 DE 10326707
(43) Veröffentlichungstag der Anmeldung: 05.04.2006
(73) Patentinhaber: Westport Power Inc., Vancouver, BC V6P 6G2 (CA)
(72) Erfinder: BARTUNEK, Bernd, 40789 Monheim (DE); TOUCHETTE, Alain, 44269 Dortmund (DE)
(74) Vertreter: Gesthuysen, von Rohr & Eggert
(86) Internationale Anmeldenummer: PCT/EP2004/006130
(87) Internationale Veröffentlichungsnummer: WO 2004/109087

(56) Entgegenhaltungen:
- WO-A-20/04070929
- DE-A- 10 130 857
- US-A- 4 750 706
- US-A- 4 865 001
- US-A- 5 479 902
- US-A- 5 697 554

## Beschreibung

Die vorliegende Erfindung betrifft eine Ventilvorrichtung und ein Verfahren zum direkten Einblasen von gasförmigem Kraftstoff in einen Verbrennungsraum eines Verbrennungsmotors sowie eine Verwendung eines Federmittels bei einer derartigen Ventilvorrichtung.

Eine derartige Ventilvorrichtung wird teilweise auch als Einspritzventil, Injektor oder Gaseinblasedüse bezeichnet. Nachfolgend wird hierfür der Begriff Ventilvorrichtung verwendet.

Die DE 195 43 080 A1 offenbart eine hydraulisch arbeitende Ventilvorrichtung für einen Gasmotor. Nachteilig ist das verhältnismäßig träge Ansprechverhalten.

Die DE 100 52 336 A1 offenbart eine Ventilvorrichtung, bei der ein Ventil wiederum hydraulisch geöffnet wird, wobei der Hydraulikdruck mittels eines elektromagnetischen oder piezoelektriscfien Steuerventils gesteuert wird. Hierbei sind das Ansprechverhalten und die Steuermöglichkeiten, insbesondere hinsichtlich Mehrfach-Einblasungen oder zur Formung des Einblaseverlaufs, nicht optimal.

Die DE 101 29 375 A1 offenbart einen Injektor mit einem Piezo-Aktuator, der gegebenenfalls über eine Übersetzungseinrichtung auf ein Steuerventil wirkt, um die Einspritzung von flüssigem Kraftstoff durch ein Nadelventil zu steuern. Der Piezo-Aktuator ist aus einem Stapel von Piezoelementen aufgebaut, wobei das dem Steuerventil benachbarte Piezoelement als Sensor zum Erkennen des Anliegens des Piezo-Aktuators am Steuerventil oder zum Erkennen des Öffnens des Steuerventils ausgebildet ist. Der Aufbau dieses Injektors ist für die Einblasung von gasförmigem Kraftstoff nicht geeignet.

Die DE 199 29 589 A1 offenbart einen Injektor mit einem Piezo-betätigten Steuerventil, daß seinerseits hydraulisch ein Nadelventil zur Einspritzung von flüssigem Kraftstoff steuert. Es ist eine elektrische Anordnung zur Bestimmung des Öffnens des Steuerventils vorgesehen, um den Piezo-Aktuator zu kalibrieren oder temperaturabhängige Änderungen zu kompensieren.

Die DE 199 05 340 A1 offenbart ein Verfahren und eine Vorrichtung zum Einstellen und Nachführen elektrischer Piezo-Aktuatoren, wobei zum Einstellen eines gewünschten Leerhubs zwischen dem Piezo-Aktuator und einem Betätigungselement dem Piezo-Aktuator eine Gleichspannung zugeführt wird, die gegebenenfalls von einer beispielsweise gepulsten Ansteuerspannung überlagert wird und die eine von der Ansteuerspannung unabhängige Längenänderungen des Piezo-Aktuators bewirkt.

Die DE 198 57 615 C1 offenbart einen Hebelübersetzer zur Übertragung einer Auslenkung eines Aktuators auf ein Stellglied, insbesondere bei einem Einspritzventil. Der Hebelübersetzer steht über Gleitelemente mit dem Aktuator und dem Stellglied in Kontakt, wobei die Berührungsflächen mit den Gleitelementen bzw. einem Gegenlager konvex oder konkav gewölbt ausgebildet sind, wobei die einander zugeordneten Oberflächenbereiche in ihren Radien zur Verringerung der Flächenpressung aneinander angepaßt sind.

Die DE 101 30 857 A1 offenbart einen Kraftstoffinjektor mit piezoelektrischen Elementen, die an einem zapfenartigen Stellelement anliegen und mittels des Stellelements ein nachgeordnetes Ventilelement zum Öffnen und Schließen einer Einspritzöffnung betätigen können. Bei geschlossener Einspritzöffnung wird der Abstand des Stellelements vom Ventilelement vorzugsweise mittels einer Abtastspule erfaßt und auf einen Sollwert geregelt, um die Wärmeausdehnung bei unterschiedlichen Betriebsbedingungen und die mechanische Verformung bei unterschiedlichen Kraftstoffdrücken und Belastungen kompensieren zu können.

Die DE 101 20 709 A1 und die DE 102 20 498 A1 offenbaren Kraftstoffeinspritzventile mit einem Piezo-Aktuator und einer einen einzigen Hebel aufweisenden Übersetzungseinrichtung.

Die DE 197 57 659 C1 offenbart ein Einspritzventil mit einem Piezo-Aktuator und einem über zwei parallel geschaltete Übertragungselemente betätigbarem Ventilelement. Zwischen den Übertragungselementen und dem Piezo-Aktuator ist ein Ausgleichselement mit einer gekrümmten Fläche angeordnet, um sowohl ein Verkippen des Piezo-Aktuators als auch unterschiedliche Bauhöhen der Übertragungselemente auszugleichen.

Die DE 101 01 799 A1 offenbart ein Kraftstoffeinspritzventil, insbesondere für ein Common-Rail-System, wobei ein Piezo-Aktuator über ein plattenförmiges Betätigungselement an zwei nierenförmigen, parallel geschalteten Kipphebeln angreift, die ihrerseits ein Ventilelement betätigen.

Bekannte Ventilvorrichtungen weisen den Nachteil auf, daß bei geöffnetem Ventil der durch den Ventilhub und die Ventilgeometrie vorgegebene Öffnungsquerschnitt verhältnismäßig gering ist, so daß beim Einblasen von gasförmigem Kraftstoff einem zugeordneten Verbrennungsraum allenfalls bei sehr hohem Gasdruck eine ausreichende Menge an Kraftstoff zuführbar ist. Es besteht daher ein Bedarf, eine Ventilvorrichtung anzugeben, die eine ausreichende Versorgung mit gasförmigem Kraftstoff bei Vollastbetrieb ermöglicht, wobei jedoch auch sehr kurze Einblasedauern im Leerlauf oder bei geringer Motorlast ermöglicht werden.

Weiter besteht ein Bedarf, eine Ventilvorrichtung und ein Verfahren zum Einblasen von gasförmigem Kraftstoff in den Verbrennungsraum eines Verbrennungsmotors anzugeben, so daß ein einfacher, kostengünstiger Aufbau und ein schnelles Ansprechen, insbesondere ein mehrfaches bzw. unterbrochenes Einblasen von Kraftstoff während eines Arbeitstakts und/oder eine Formung des Einblaseverlaufs über die Einblasedauer, ermöglicht werden.

Der vorliegenden Erfindung liegt die Aufgabe zugrunde, eine Ventilvorrichtung und ein Verfahren zum Einblasen von gasförmigem Kraftstoff in den Verbrennungsraum eines Verbrennungsmotors sowie die Verwendung eines Federmittels bei einer Ventilvorrichtung anzugeben, so daß eine ausreichende Versorgung mit gasförmigem Kraftstoff insbesondere im Vollastbetrieb des Motors, ein einfacher, kostengünstiger und verschleißarmer Aufbau und/oder ein schnelles Ansprechen sowie ein variabler Ventilhub, insbesondere ein mehrfaches bzw. unterbrochenes Einblasen von Kraftstoff während eines Arbeitstakts und/oder eine Formung des Einblaseverlaufs über die Einblasedauer, ermöglicht werden.

Die obige Aufgabe wird durch eine Ventilvorrichtung gemäß Anspruch 1, ein Verfahren gemäß Anspruch 10 oder eine Verwendung gemäß Anspruch 14 gelöst. Vorteilhafte Weiterbildungen sind Gegenstand der Unteransprüche.

Zur Erzielung eines guten Ansprechverhaltens bei für das Einblasen von gasförmigem Kraftstoff ausreichend großer Ventilöffnung, also ausreichend gro-ßem Ventilhub, ist vorzugsweise die Kombination eines Direktantriebs, wie eines piezoelektrisch oder magnetostriktiv, gegebenenfalls auch elektromagnetisch arbeitenden Aktuators, mit einer zugeordneten Übersetzungseinrichtung vorgesehen, die mechanisch den Hub des Aktuators vergrößert. Dies ermöglicht einen einfachen Aufbau der Ventilvorrichtung, wobei ein ausgezeichnetes, also schnelles Ansprechverhalten und eine ausreichend große Ventilöffnung für die Einblasung von gasförmigem Kraftstoff erreichbar sind.

Eine wesentliche Idee der vorliegenden Erfindung liegt darin, daß die Übersetzungseinrichtung mindestens zwei Hebel aufweist, die in Serie geschaltet sind, um den Hub des Aktuators zur Betätigung des Ventils zu vergrößern. Dies gestattet einen einfachen Aufbau, wobei die zwei Hebel einen kompakten Aufbau und ein für das Einblasen von gasförmigem Kraftstoff wünschenswertes großes Übersetzungsverhältnis ermöglichen.

Vorzugsweise weist der Aktuator ein elektromagnetisches, magnetostriktives oder insbesondere piezoelektrisches Antriebsmittel bzw. -system auf. In Kombination mit dem bevorzugten Aufbau der Übersetzungseinrichtung wird ein sehr schnelles Schalten bzw. Ansprechen der Ventilvorrichtung ermöglicht, so daß insbesondere ein mehrfaches bzw. unterbrochenes Einblasen von Kraftstoff während eines Arbeitstakts und/oder eine Formung des Einblaseverlaufs über die Einblasedauer (Variation des Durchflusses bzw. der Einblasrate über die Einblasdauer) ermöglicht wird bzw. werden.

Ein weiterer wesentlicher, auch unabhängig realisierbarer Aspekt der vorliegenden Erfindung liegt darin, dem Ventil eine Sensoreinrichtung zur Erfassung der Position oder des Hubs eines von der Übersetzungseinrichtung bewegbaren Ventilelements zuzuordnen. Durch die unmittelbare Erfassung einer Öffnung des Ventils (Hub des Ventilelements) ist es möglich, das gerade bei großen Übersetzungsverhältnissen relevante Spiel zwischen dem Aktuator und dem Ventil zu minimieren oder zu begrenzen, so daß ein schnelles und definiertes (beispielsweise zeitlich bestimmtes Öffnen) Ansprechverhalten ermöglicht wird.

Insbesondere ermöglicht die vorschlagsgemäße Ventilvorrichtung einen variablen, vorzugsweise regel- oder steuerbaren Ventilhub, so daß auch geringere bzw. kleinere Gasmengen im Leerlauf- oder Teillastbetrieb des Motors eingeblasen werden können (Mengendrosselung durch das Ventil) und/oder eine Anpassung an unterschiedliche Versorgungsdrücke möglich ist.

Ein schnelles Ansprechen und ein variabler Ventilhub bzw. Öffnungsquerschnitt des Ventils ermöglichen insbesondere eine genaue Festlegung der Einblasedauer und -menge, ein mehrfaches bzw. unterbrochenes Einblasen von Kraftstoff und eine Formung des Einblaseverlaufs über die Einblasedauer.

Ein weiterer Aspekt der vorliegenden Erfindung liegt darin, zwischen dem Aktuator und der Übertragungseinrichtung oder an der Übertragungseinrichtung ein Federmittel vorzusehen, so daß im Antriebszug zum Ventil hin - insbesondere bei abgeschaltetem bzw. inaktiviertem Aktuator - auftretendes Spiel lediglich zwischen dem Aktuator und der Übertragungseinrichtung auftritt, indem das Federmittel in Betätigungsrichtung mittelbar oder unmittelbar auf die Übertragungseinrichtung wirkt. Dies ermöglicht eine Verschleißminimierung und definierte Steuerung des erforderlichen bzw. gewünschten Spiels und ist einem definierten, schnellen Ansprechverhalten zuträglich.

Weitere Vorteile, Merkmale, Eigenschaften und Aspekte der vorliegenden Erfmdung ergeben sich aus der folgenden Beschreibung bevorzugter Ausführungsformen anhand der Zeichnung. Es zeigt:
- Fig. 1: eine schematische Schnittdarstellung einer vorschlagsgemäßen Ventilvorrichtung und eines teilweise angedeuteten Verbrennungsmotors gemäß einer ersten Ausführungsform;
- Fig. 2: eine schematische Schnittdarstellung einer vorschlagsgemäßen Ventilvorrichtung gemäß einer zweiten Ausführungsform;
- Fig. 3: eine schematische ausschnittweise Schnittdarstellung einer Übersetzungseinrichtung der Ventilvorrichtung gemäß Fig. 2; und
- Fig. 4: eine schematische Schnittdarstellung einer vorschlagsgemäßen Ventilvorrichtung gemäß einer dritten Ausführungsform.

In den Figuren werden für gleiche oder ähnliche Teile die selben Bezugszeichen verwendet, wobei entsprechende oder vergleichbare Vorteile erreicht werden, auch wenn eine wiederholte Beschreibung aus Vereinfachungsgründen weggelassen ist.

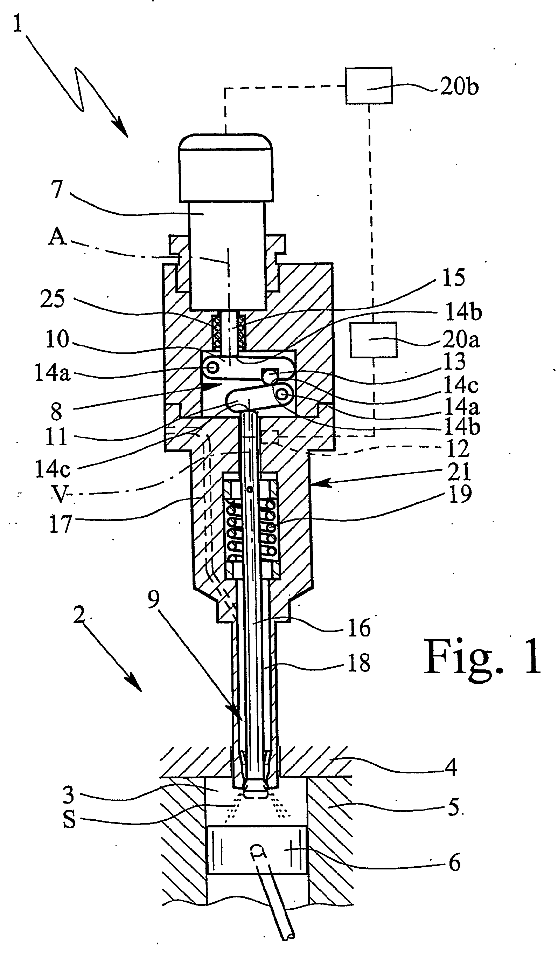

Fig. 1 zeigt in schematischer, nicht maßstabsgerechter Darstellung eine vorschlagsgemäße Ventilvorrichtung 1 zum Einblasen von gasförmigem Kraftstoff, wie Wasserstoff, Erdgas, eine Mischung von Wasserstoff und Erdgas oder dergleichen, für einen ausschnittsweise dargestellten Verbrennungsmotor 2. Insbesondere dient die Ventilvorrichtung 1 einem direkten Einblasen des Kraftstoffs, wie durch die gestrichelten Kraftstoffstrahlen S angedeutet, in einen Verbrennungsraum 3 des Verbrennungsmotors 2.

Üblicherweise ist die Ventilvorrichtung 2 in einen Zylinderkopf 4 des Verbrennungsmotors 2 eingebaut. Andere Komponenten, wie Einlaßventile, Auslaßventile oder eine Zündeinrichtung, sind aus Vereinfachungsgründen nicht dargestellt.

Der Verbrennungsraum 3 ist weiter beispielsweise durch einen Zylinder bzw. Zylinderblock 5 und einen darin bewegbaren Kolben 6 begrenzt.

Wie bereits erwähnt, dient die Ventilvorrichtung 1 einem vorzugsweise direktem Einblasen von gasförmigem Kraftstoff in den zugeordneten Verbrennungsraum 3. Der Kraftstoff wird insbesondere mittels einer nicht dargestellten Zuführeinrichtung oder einem nicht dargestellten Druckspeicher bereitgestellt. Bedarfsweise wird der Kraftstoff durch eine Verdichtungseinrichtung, Druckregeleinrichtung oder dergleichen auf einen gewünschten Druck gebracht oder erst fahrzeugseitig oder von dem Verbrennungsmotor 2 zugeordneten, nicht dargestellten Komponenten erzeugt.

Die Ventilvorrichtung 1 weist einen vorzugsweise gekapselten Aktuator 7, eine davon betätigbare Übersetzungseinrichtung 8 und ein sich daran anschlie-ßendes Ventil 9 auf. Das Ventil 9 ist vom Aktuator 7 mittels der Übersetzungseinrichtung 8 betätigbar, insbesondere öffenbar.

Der Aktuator 7 stellt einen Direktantrieb oder Linearantrieb dar und weist ein nicht dargestelltes, vorzugsweise elektromagnetisch, magnetostriktiv oder piezoelektrisch arbeitendes Antriebsmittel, insbesondere einen Stapel bzw. Stack von Piezoelementen, auf. Der Aktuator 7 ist elektrisch aktivierbar bzw. steuerbar. Dies ermöglicht ein sehr schnelles Ansprechen und hohe Stell- bzw. Betätigungskräfte des Aktuators 7.

Die vom Aktuator 7 erzeugbare Linearbewegung bzw. der Hub des Aktuators 7 ist verhältnismäßig klein und beträgt insbesondere etwa 20 bis 60 µm. Zur Einblasung von gasförmigem Kraftstoff ist jedoch ein großer Öffnungsquerschnitt erforderlich, um innerhalb der verhältnismäßig kurzen Einblasedauer eine ausreichende Menge an Kraftstoff in den Verbrennungsraum 3 einblasen zu können. Dementsprechend ist ein großer Ventilhub vorteilhaft bzw. erforderlich. Die den Hub des Aktuators 7 vergrößernde Übersetzungseinrichtung 8 weist daher ein Übersetzungsverhältnis größer 5, insbesondere größer 10 oder 12, auf. Insbesondere beträgt das Übersetzungsverhältnis etwa mindestens 15.

Die Übersetzungseinrichtung 8 weist mindestens zwei Hebel 10 und 11 auf. Durch die Verwendung von mindestens zwei Hebeln 10, 11 wird trotz kompaktem Aufbau das gewünschte, verhältnismäßig große Übersetzungsverhältnis ermöglicht. Insbesondere arbeitet die Übersetzungseinrichtung 8 ausschließlich hebelmechanisch.

Die Hebel 10, 11 sind vorzugsweise länglich bzw. gerade und/oder stabförmig ausgebildet. Vorzugsweise sind die Hebel 10, 11 aus einer hochfesten, möglichst leichten Legierung, Verbundwerkstoff (insbesondere kohlefaserverstärktem Kunststoff) und/oder Keramik hergestellt.

Ein wesentlicher Aspekt ist, daß die Hebel 10, 11 zumindest im wesentlichen starr ausgebildet sind bzw. eine hohes Elastizitätsmodul aufweisen, um ein definiertes schnelles Ansprechen, insbesondere Öffnen und Schließen, sicherzustellen. Jedoch sind die Hebel 10, 11 vorzugsweise möglichst leicht ausgebildet, um geringe Trägheitskräfte zu erreichen und insbesondere die bewegte Masse zu minimieren.

Die Hebel 10, 11 sind vorzugsweise im wesentlichen parallel zueinander verlaufend und/oder übereinanderliegend angeordnet. So ergibt sich ein kompakter Aufbau. Insbesondere bilden die in Serie geschalteten Hebel 10, 11 einen gefalteten Antriebszug, der eine kompakte, raumsparende Anordnung ermöglicht.

Vorzugsweise greift der Aktuator 7 unmittelbar an der Übersetzungseinrichtung 8 bzw. am ersten Hebel 10 an. Die Übersetzungseinrichtung 8 bzw. der zweite Hebel 11 wirkt vorzugsweise unmittelbar auf das Ventil 9 ein, wie in Fig. 1 angedeutet. Jedoch sind hier auch andere Konstruktionen oder der Einsatz von Zwischenstücken oder dergleichen möglich.

Insbesondere bei dem vorschlagsgemäßen Einsatz mehrerer Hebel 10, 11 bzw. bei einem großen Übersetzungsverhältnis ist das zwischen dem Aktuator 7 und dem Ventil 9 auftretende Spiel besonders nachteilig, und zwar insbesondere hinsichtlich eines gewünschten schnellen Ansprechens und/oder einer genauen Dosierung bzw. Formung des Einblaseverlaufs sowie hinsichtlich eines geringen Verschleißes der Kontaktflächen.

Die Ventilvorrichtung 1 weist zur Minimierung des genannten Spiels eine dem Ventil 9 zugeordnete Sensoreinrichtung 12 auf, die einer Erfassung einer Öffnung bzw. Stellung des Ventils 9 dient, so daß das genannte Aktuator/Ventil-Spiel, das sich insbesondere über die Zeit durch Abnutzung bzw. Verschleiß vergrößert oder temperaturabhängig ändert, durch eine entsprechende Steuerung oder Regelung des Aktuators 7 kompensiert bzw. minimiert oder begrenzt werden kann.

Die Sensoreinrichtung 12 ist vorzugsweise unmittelbar in die Ventilvorrichtung 1 integriert, vorzugsweise in unmittelbarer Nähe des Ventils 9 angeordnet. Beispielsweise umfaßt die Sensoreinrichtung 12 als Sensor einen Wegaufnehmer, Mikroweggeber, Näherungsweggeber oder dergleichen, der die aktuelle Stellung bzw. Position des Ventils 9 bzw. eines bewegbaren Ventilelements 16, insbesondere den Öffnungsgrad, direkt oder indirekt erfaßt. Beispielsweise kann die Erfassung kapazitiv oder basierend auf einem Wirbeleffekt, Hall-Effekt oder elektromagnetischen Feldänderungen erfolgen.

Zur Minimierung des Verschleißes ist vorgesehen, daß die Hebel 10, 11 zumindest bereichsweise mit einer entsprechend widerstandsfähigen Beschichtung versehen und/oder mit einem vorzugsweise keramischen oder Hartmetall-Einsatz 13, wie beispielhaft für den ersten Hebel 10 in Fig. 1 angedeutet, versehen sind.

Die Übersetzungseinrichtung 8 bzw. die Hebel 10, 11 sind vorzugsweise auch derart ausgebildet, daß kein Schmiermittel erforderlich ist. Jedoch kann beispielsweise auch ein Feststoffschmiermittel oder dergleichen bedarfsweise eingesetzt werden.

Jeder Hebel 10 ist um einen Lagerpunkt 14a verschwenkbar gelagert. Jeweils am Angriffspunkt 14b wird auf den Hebel 10 bzw. 11 eingewirkt. Die vergrö-ßerte bzw. verstärkte Bewegung wird vom Hebel 10 bzw. 11 dann jeweils über eine Abtriebspunkt 14c abgegeben bzw. abgenommen. Bei den genannten "Punkten" handelt es sich gegebenenfalls auch um linienförmige und/oder flächige Anlage- bzw. Eingriffsbereiche, die sich gegebenenfalls je nach Hebelstellung verschieben können.

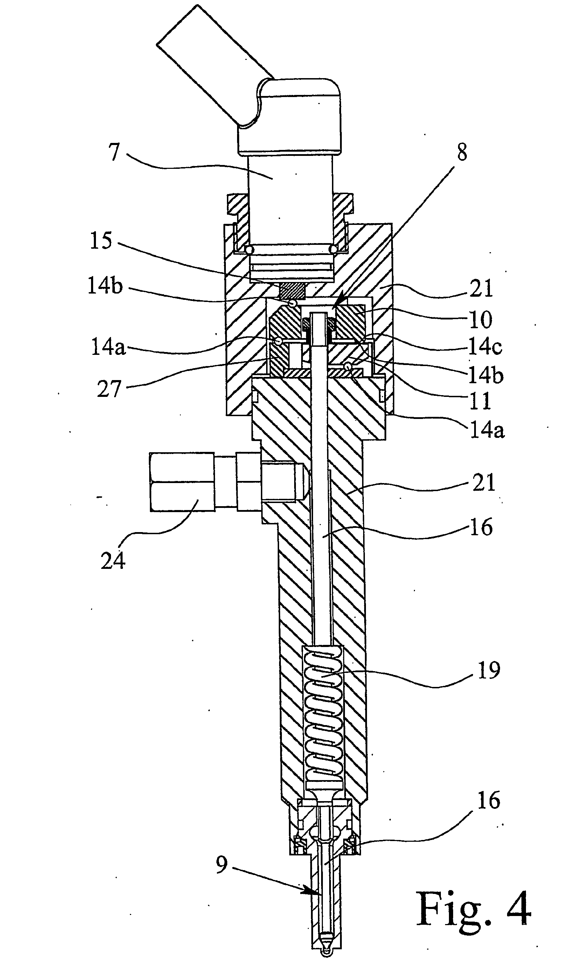

Die Hebel 10, 11 können wahlweise fest oder schwimmend gelagert sein. Dies wird später noch anhand von Fig. 4 erläutert.

Im Hinblick auf einen kompakten Aufbau erstrecken sich die beiden Hebel 10, 11 zumindest im wesentlichen quer zu der Wirkachse bzw. Hubachse A des Aktuators 7 und zur Bewegungs- bzw. Betätigungsachse V des Ventils 9 bzw. dessen Ventilelements 16.

Vorzugsweise verlaufen die Achsen A und V koaxial oder parallel versetzt zueinander. Dies ermöglicht einen sehr schlanken, länglichen Aufbau der Ventilvorrichtung 1.

Alternativ können die Achsen A und V jedoch auch geneigt zueinander, insbesondere quer zueinander, verlaufen.

Vorzugsweise greift der Aktuator 7 mittels eines Stößels 15 oder dergleichen unmittelbar am ersten Hebel 10 am Antriebspunkt 14b an. Der Stößel 15 weist eine vorzugsweise ballige Kontaktfläche zum ersten Hebel 10 hin auf, so daß eine im wesentlichen punktförmige, gegen Verschwenken bzw. Fluchtungsfehler unempfindliche Anlage gebildet ist.

Eine Längenausdehnung bzw. Aktivierung oder Hub des Aktuators 7 bewirkt ein Verschwenken des ersten Hebels 10 bei der Darstellung gemäß Fig. 1 in Uhrzeigerrichtung, also nach unten.

Der vergrößerte Hub wird vom Abtriebspunkt 14c des ersten Hebels 10 - hier von der Oberfläche des keramischen Einsatzes 13 - auf den Antriebspunkt 14b des zweiten Hebels 11 übertragen. Dieser Antriebspunkt 14b des zweiten Hebels 11 liegt vorzugsweise in der Nähe des Lagerpunktes 14a des zweiten Hebels 11.

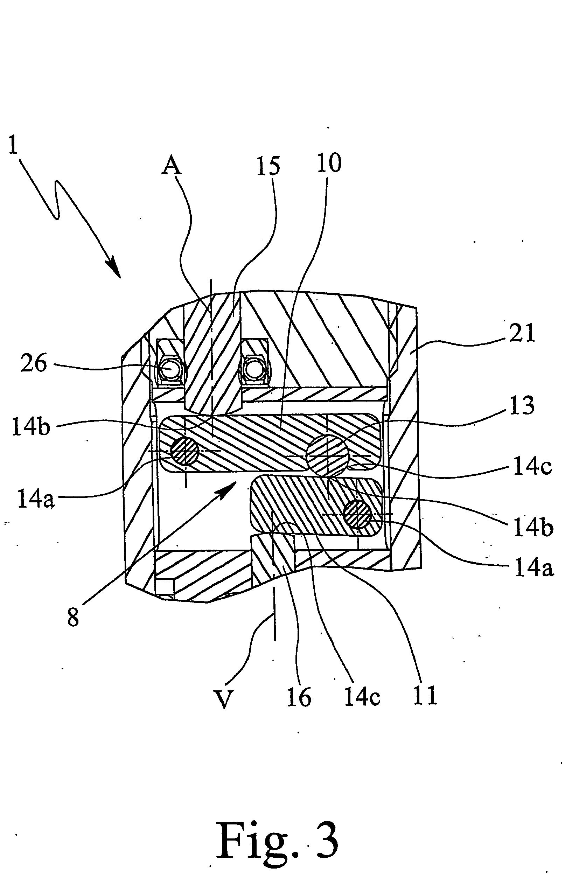

Die Hebel 10, 11 sind vorzugsweise jeweils im wesentlichen linienförmig gelagert (linienförmige Ausbildung der Lagerpunkte 14a), wie in Fig. 3 angedeutet. So wird eine definierte Lagerung und Kinematik erreicht. Zwischen den beiden Hebeln 10, 11 ist vorzugsweise wiederum eine im wesentlichen punktförmige Anlage zur Bewegungsübertragung vorgesehen.

Der zweite Hebel 11 überträgt dann den bereits vom ersten Hebel 10 vergrößerten Hub des Aktuators 7 über seinen Abtriebspunkt 14c auf das Ventil 9, insbesondere unmittelbar auf das Ventilelement 16, wie eine Ventilnadel oder einen Ventilteller, einen Stößel oder dergleichen, des Ventils 9. Vorzugsweise ist wiederum eine im wesentlichen punktförmige Anlage zwischen dem zweiten Hebel 11 und dem Ventilelement 16 oder einem Übertragungselement durch vorzugsweise entsprechende ballige Ausbildung einer Kontaktfläche gebildet.

Bei der Betätigung bzw. beim Öffnen des Ventils 9 wird der zweite Hebel 11 vom ersten Hebel 10 ebenfalls nach unten, jedoch entgegen des Uhrzeigersinns bei der Darstellung gemäß Fig. 1 verschwenkt.

Der so vergrößerte Hub des Aktuators 7 führt dazu, daß das Ventil 9 ausreichend öffnet, so daß der beispielsweise über einen gestrichelten Kanal 17 dem Ventilhohlraum 18 zugeführte, gasförmige Kraftstoff in den Verbrennungsraum 3 einströmen kann.

Eine ausreichende Leichtgängigkeit des Ventils 9 bzw. des Ventilelements 16 wird insbesondere dadurch erreicht, daß das Ventilelement 16 nur bereichsweise, insbesondere im Bereich beider Enden, geführt ist, und zwar bei entsprechender Materialwahl vorzugsweise schmiermittelfrei.

Zur Beendigung der Einblasung wird der Aktuator 7 deaktiviert und das Ventil 9 von einer zugeordneten Rückstelleinrichtung 19 geschlossen, die die Übertragungseinrichtung 8 und den Stößel 15 zurückdrückt. Vorzugsweise ist die Rückstelleinrichtung 19 in das Ventil 9 integriert bzw. diesem zugeordnet und greift am Ventilelement 16 an.

Beim Darstellungsbeispiel weist die Rückstelleinrichtung 19 eine Feder, insbesondere eine Schraubenfeder auf, gegen deren Kraft das Ventil 9 bzw. dessen Ventilelement 16 betätigbar, insbesondere öffenbar ist. Jedoch kann hierfür auch ein sonstiges Federelement oder dergleichen eingesetzt werden.

Die Ventilvorrichtung 1 weist vorzugsweise ein Federmittel 25, wie eine Schraubenfeder, auf, das der Übersetzungseinrichtung 8 oder dem Stößel 15 zugeordnet ist, um zumindest die Übersetzungseinrichtung 8 und ggf. den Stößel 15 zum Ventil 9 hin bzw. in Betätigungsrichtung vorzuspannen. So wird erreicht, daß das zwischen dem Aktuator 7 und dem Ventil 9 bzw. Ventilelement 16 - bei geschlossenem Ventil 9 bzw. im Ruhezustand des Aktuators 7 - vorhandene bzw. erforderliche Spiel nur zwischen dem Aktuator 7 und dem Stößel 15 oder zwischen dem Stößel 15 und der Übersetzungseinrichtung 8 auftritt, also die anderen Komponenten des Antriebszugs immer spielfrei aneinander anliegen. Die vom Federmittel 25 auf das Ventilelement 16 ausgeübte Öffnungskraft ist jedoch wesentlich geringer als die von der Rückstelleinrichtung 19 ausgeübte Schließkraft, um ein sicheres Schließen des Ventils 9 zu gewährleisten.

Die Ventilvorrichtung 1 weist eine zugeordnete, vorzugsweise in die Ventilvorrichtung 1 integrierte Signalaufbereitung 20a auf, die Signale der Sensoreinrichtung 12 hinsichtlich der Position oder des Hubs des Ventilelements 16 aufbereitet und für die weitere Steuerung bzw. Regelung einer der Ventilvorrichtung zugeordneten Steuereinrichtung 20b zur Verfügung stellt.

Die Steuereinrichtung 20b (ggf. auch Motorsteuerung bzw. Motor-ECU) steuert oder regelt den Aktuator 7 in Abhängigkeit von Signalen der Sensoreinrichtung 12, und zwar derart, daß das Spiel zwischen dem Aktuator 7 und dem Ventil 9 bzw. dessen Ventilelement 16 bei geschlossenem oder nicht betätigtem Ventil 9, also in der Ruhestellung, begrenzt oder minimiert wird. Diese Steuerung oder Regelung wird nachfolgend Ruhesteuerung genannt.

Vorzugsweise wird die Ruhesteuerung dadurch realisiert, daß in einem Einstellvorgang ausgehend von einem Zustand mit unbetätigtem Ventil 9 bzw. beim Schließen des Ventils 9 der Aktuator 7, insbesondere langsam oder schrittweise, zunehmend aktiviert oder sein Hub in Richtung zur Betätigung des Ventils 9 vergrößert wird, bis ein Öffnen des Ventils 9 bzw. ein Hub des Ventilelements 16 von der Sensoreinrichtung 12 erfaßt wird. Dann wird die Aktivierung des Aktuators 7 bzw. dessen Hub wieder um ein bestimmtes Maß zu einem Basiswert verringert, um das Spiel zwischen dem Aktuator 7 und dem Ventil 9 bzw. der Übersetzungseinrichtung 8 festzulegen oder zu minimieren.

In dem Einstellvorgang wird also insbesondere der dem Aktuator 7 zugeführte Strom bzw. die am Aktuator 7 anliegende Spannung wieder etwas derart reduziert, daß das Ventil 9 gerade noch geschlossen ist. Ausgehend von diesem Basiswert bzw. dieser Grundstellung wird dann bei späteren Einblasevorgängen der Aktuator 7 zusätzlich bedarfsgerecht aktiviert bzw. dessen Hub vergrößert, um eine Betätigung, insbesondere ein Öffnen, des Ventils 9 und damit ein gewünschtes Einblasen von Kraftstoff zu erreichen.

Nach einer vorzugsweise vorbestimmten Anzahl oder von Betriebsparametern abhängig variierenden Anzahl von Einblasevorgängen bzw. Einspritzzyklen oder Motortakten und/oder bei nicht vollständiger Rückkehr des Ventilelements 16 in seinem unbetätigten Zustand bzw. nicht vollständigem Schließen des Ventils 9 wird der genannte Einstellvorgang wiederholt. Der dabei aktuell neu bestimmte Basiswert kann dann für den nächsten und die weiteren Einblasevorgänge eingesetzt werden. Gemäß einer Ausführungsvariante ist es jedoch auch möglich, den zukünftigen Basiswert aus einem aktuell neu bestimmten Basiswert und beispielsweise aus vorangehenden Basiswerten, beispielsweise durch Mittelwertbildung, gegebenenfalls auch gewichtet, zu bestimmen.

Die über die Zeit variierenden Basiswerte geben einen Aufschluß über den Verschleiß bzw. die Abnutzung des Antriebszuges. Vorzugsweise werden die Basiswerte daher fortlaufend gespeichert und zur Erfassung von Verschleiß, beispielsweise bei Inspektionen oder zur Fehlererkennung, ausgewertet.

Es ist anzumerken, daß das bei der Ruhesteuerung vorgesehene, bestimmte Maß zur Verringerung des Hubs des Aktuators 7 auf den Basiswert fest vorgegeben, von Betriebsparametern abhängig bzw. kennfeldgesteuert und/oder aus vorangehenden Werten bestimmt werden kann.

Es ist anzumerken, daß die oben genannte Ruhesteuerung vorzugsweise rückgekoppelt erfolgt und so eine automatische Kompensation von Spiel bzw. Verschleiß zwischen dem Aktuator 7 und dem Ventil 9 bzw. der Übersetzungseinrichtung 8 ermöglicht.

Zum Öffnen des Ventils erfolgt vorzugsweise anfänglich eine langsame Aktivierung bzw. Hubbewegung des Aktuators 7, bis das durch die Ruhesteuerung vorgegebene Spiel überwunden ist, um ein übermäßiges Aufeinanderprallen der durch das Spiel beabstandeten Flächen zu vermeiden und damit verschleiß zu minimieren.

Die Steuerung oder Regelung der Einblasung, also insbesondere des Einblasezeitpunkts, der Einblasedauer, das Ventilhubs, der Öffnungs- und Schließgeschwindigkeiten, u. dgl., und die entsprechende Ansteuerung bzw. Aktivierung des Aktuators 7 erfolgen vorzugsweise durch die Steuereinrichtung 20b, insbesondere kennfeldgesteuert bzw. abhängig von der Motorlast und sonstigen Betriebsparametern.

Selbstverständlich ist der maximale Öffnungsquerschnitt des Ventils 9 an den Vollastbetrieb des Motors 1 angepaßt.

Bei der ersten Ausführungsform ist das Ventil 9 nach außen, also zum Verbrennungsraum 3 hin öffnend ausgebildet.

Bei der dargestellten Ausführungsform wird der Kraftstoff vorzugsweise konusförmig - insbesondere mit einem Öffnungswinkel von 60° bis 120° - in den Verbrennungsraum 3 eingeblasen.

Jedoch kann an dem in den Verbrennungsraum 3 hineinragenden Ende bedarfsweise eine nicht dargestellte Düse, insbesondere mit mehreren Durchtrittsöffnungen, zur Erzeugung einer entsprechenden Anzahl und in gewünschter Weise gerichteter Kraftstoffstrahlen S angeordnet sein.

Die Ventilvorrichtung 1 weist vorzugsweise ein gemeinsames, insbesondere mehrteiliges Gehäuse 21 zur Aufnahme und/oder Halterung des Aktuators 7, der Übersetzungseinrichtung 8, des Ventils 9, der Rückstelleinrichtung-19, der Düse, der Sensoreinrichtung 12 und/oder der Signalaufbereitung 20a auf.

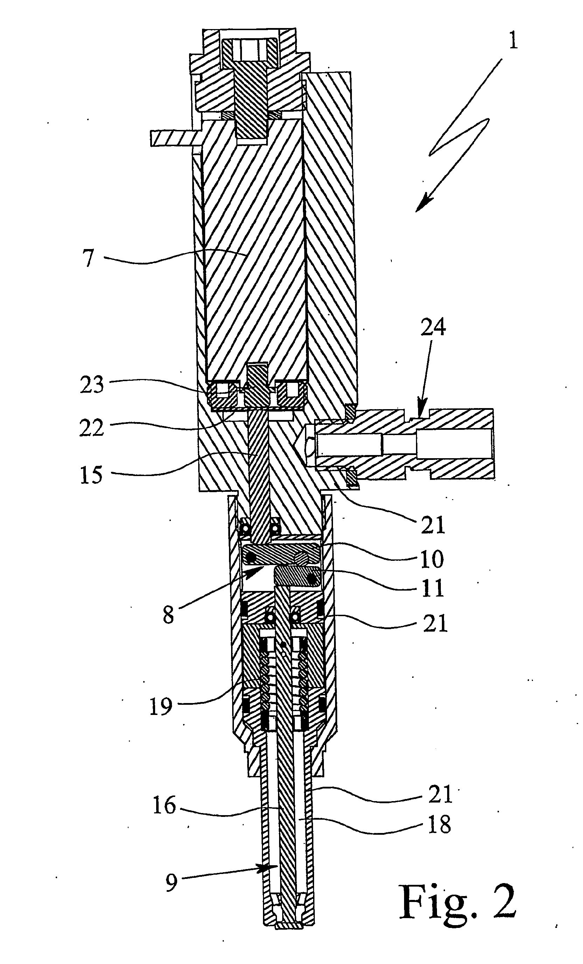

Nachfolgend werden weitere Ausführungsformen anhand der Fig. 2, 3 und 4 erläutert. Bei diesen Ausführungsformen sind die Sensoreinrichtung 12, die Steuereinrichtung 20 und der Kanal 17 aus Vereinfachungsgründen weggelassen. Die diesbezüglichen Aufführungen gelten hier jedoch entsprechend. Nachfolgend wird lediglich auf sonstige, wesentlich erscheinende Unterschiede zur ersten Ausführungsform näher eingegangen.

Bei der zweiten Ausführungsform der Ventilvorrichtung 1 gemäß Fig. 2 ist der vorzugsweise bereits gekapselte Aktuator 7 gasdicht gegenüber der Übersetzungseinrichtung 8 abgedichtet, insbesondere mittels einer Membran 22. Die Membran 22 ist beim Darstellungsbeispiel zwischen einem Stößel 23 des Aktuators 7 und dem an der Übersetzungseinrichtung 8 angreifenden Stößel 15 eingebaut bzw. angeordnet.

Die Ventilvorrichtung 1 gemäß der zweiten Ausführungsform weist einen seitlichen Anschluß 24 zur Zuführung des Kraftstoffs auf. Auch hier kommuniziert der Anschluß 24 mit dem Innenraum 18 des Ventils 9. Wie bereits erwähnt, ist hier jedoch ein Kanal 17, wie in Fig. 1 angedeutet, nicht dargestellt.

Fig. 3 zeigt in ausschnittsweiser Teilschnittansicht die Übersetzungseinrichtung 8 der Ventilvorrichtung 1 gemäß der zweiten Ausführungsform gemäß Fig. 2. Diese Übersetzungseinrichtung 8 entspricht im wesentlichen der Übersetzungsvorrichtung 8 gemäß der ersten Ausführungsform. Fig. 3 veranschaulicht insbesondere die Lage der Lagerpunkte 14a, der Antriebspunkte 14b und der Abtriebspunkte 14c der Hebel 10 und 11.

Die Lagerpunkte 14a der Hebel 10, 11 sind vorzugsweise auf entgegengesetzten Seiten bzw. im wesentlichen einander gegenüberliegend bezüglich der Achse V des Ventils 9 angeordnet. Dies ist einem kompakten Aufbau sehr zuträglich.

Fig. 3 zeigt als Ausführungsvariante eine umlaufende, dem Stößel 15 zugeordnete Dichtung 26, insbesondere in Form eines ggf. rollbaren O-Rings, zur Abdichtung des Aktuators 7 gegenüber dem Kraftstoff. Die Dichtung 26 kann zusätzlich oder alternativ zu der Membran 22 vorgesehen sein.

Die schematische Schnittdarstellung gemäß Fig. 4 zeigt die Ventilvorrichtung 1 in einer dritten Ausführungsform. Auch hier ist ein seitlicher Anschluß 24 für die Zuführung des nicht dargestellten Kraftstoffs vorgesehen.

Wesentliche Unterschiede zur ersten und zweiten Ausführungsform bestehen darin, daß bei der dritten Ausführungsform das Ventil 9 als nach innen öffnendes Nadelventil ausgebildet ist und daß dementsprechend die Übersetzungseinrichtung 8 etwas anders ausgebildet ist. Im Gegensatz zur ersten und zweiten Ausführungsform sind bei der dritten Ausführungsform nämlich die Bewegungsrichtung bzw. Hubrichtung des Aktuators 7 und die daraus resultierende Bewegung des Ventils 9 bzw. dessen Ventilelement 16 entgegengerichtet. Dies wird dadurch erreicht, daß der Abtriebespunkt 14c des ersten Hebels 10 und damit der Antriebspunkt 14b des zweiten Hebels 11 außerhalb des Lagerpunkts 14a des zweiten Hebels 11 liegen; der Lagerpunkt 14a des zweiten Hebels 11 also zwischen dessen Antriebspunkt 14b und dessen Abtriebspunkt 14c liegt.

Bei Aktivierung des Aktuators 7 verschwenken beide Hebel 10, 11 in die gleiche Drehrichtung, nämlich jeweils in Uhrzeigerrichtung, so daß der untere Hebel 11 nach oben schwingt, und das den Hebel 11 vorzugsweise durchgreifende Ventilelement 16 zum Öffnen des Ventils 9 bei der Darstellung gemäß Fig. 4 gegen die Kraft der Rückstelleinrichtung 19 nach oben anhebt.

Fig. 4 veranschaulicht weiter die vorzugsweise schwimmende Lagerung der Hebel 10, 11. Beispielsweise ist ein Einsatz 27 in das Gehäuse 21 eingesetzt, der den Hebel 10 und/oder 11 lagert und vorzugsweise eine Aussparung zur seitlichen Führung des Hebels 10 und/oder 11 aufweist.

Bei der dritten Ausführungsform sind die beiden Hebel 11 vorzugsweise im wesentlichen stabförmig, länglich, plattenförmig oder ringförmig ausgebildet, wobei die eigentliche Lagerung und Mechanik ansonsten im wesentlichen den ersten beiden Ausführungsformen entsprechen.

Die vorschlagsgemäße Ventilvorrichtung 1 ermöglicht Ansteuer- bzw. Öffnungszeiten von 0,1 ms und damit Mehrfach-Einspritzungen bzw. -Einblasungen von Kraftstoff während eines Zyklus.

Ein genereller Vorteil liegt darin, daß die vorschlagsgemäße Ventilvorrichtung 1 sehr preisgünstig herstellbar ist, insbesondere bei Verwendung eines piezoelektrischen Aktuators 7.

Generell ist anzumerken, daß die einzelnen Komponenten gegenüber dem Kraftstoff resistent ausgebildet sind. Dies gilt insbesondere bei Verwendung von Wasserstoff, da beispielsweise Titanlegierungen oder Elastomere gegenüber Wasserstoff nicht beständig sind.

## Patentansprüche

1. Ventilvorrichtung (1) für einen Verbrennungsmotor (2) zur Einblasung von gasförmigem Kraftstoff mit einem Aktuator (7), einer Übersetzungseinrichtung (8) zur Vergrößerung des Hubs des Aktuators (7), und einem vom Aktuator (7) mittels der Übersetzungseinrichtung (8) betätigbaren Ventil (9), wobei das Ventil (9) bzw. dessen Ventilelement (16) direkt das Einblasen bzw. den Strom des gasförmigen Kraftstoffs in einen zugeordneten Verbrennungsraum (3) des Verbrennungsmotors (2) steuert **dadurch gekennzeichnet, daß** die Ubersetzungseinrichtung (8) mindestens zwei Hebel (10, 11) aufweist, die in Serie geschaltet sind, um den Hub des Aktuators (7) zur Betätigung des Ventils (9) zu vergrößern, und/oder daß die Ventilvorrichtung (1) eine einem bewegbaren Ventilelement (16) des Ventils (9) zugeordnete Sensoreinrichtung (12) aufweist, um die Position oder den Hub des Ventilelements (16) zu erfassen.

2. Ventilvorrichtung nach Anspruch 1, **dadurch gekennzeichnet, daß** der Aktuator (7) elektromagnetisch, piezoelektrisch oder magnetostriktiv arbeitet, und/oder daß die Wirkachse (A) des Aktuators (7) parallel versetzt oder koaxial zur Betätigungsachse (V) des Ventils (9) oder quer oder geneigt zur Betätigungsachse (V) des Ventils (9) verläuft.

3. Ventilvorrichtung nach einem der voranstehenden Ansprüche, **dadurch gekennzeichnet, daß** die Übersetzungseinrichtung (8) ausschließlich hebelmechanisch arbeitet und/oder unmittelbar am Ventil (9) bzw. dessen Ventilelement zu dessen Betätigung angreift und/oder daß die Übersetzungseinrichtung (8) ein Übersetzungsverhältnis größer 5, insbesondere größer 10 oder 12, aufweist, und/oder daß der Übersetzungseinrichtung (8) ein Federmittel vor- oder zugeordnet ist, so daß Spiel zwischen dem Aktuator (7) und der Übersetzungseinrichtung (8) oder einem dazwischen angeordneten Übertragungselement auftreten kann, jedoch zwischen den Hebeln (10, 11) der Übertragungseinrichtung (8) oder zwischen der Übertragungseinrichtung (8) und dem Ventil (9) vermieden wird.

4. Ventilvorrichtung nach einem der voranstehenden Ansprüche, **dadurch gekennzeichnet, daß** die Hebel (10, 11) scheibenförmig, länglich, plattenförmig, stabförmig und/oder starr ausgebildet sind und/oder ein hohes Elastizitäts-Modul aufweisen, und/oder daß die Hebel (10, 11) aus einer leichten Metallegierung, Verbundwerkstoff und/oder Keramik hergestellt sind, und/oder daß mindestens ein Hebel (10, 11) zur Verschleißminimierung zumindest bereichsweise beschichtet und/oder mit einem vorzugsweise keramischen oder Hartmetall-Einsatz (13) versehen ist.

5. Ventilvorrichtung nach einem der voranstehenden Ansprüche, **dadurch gekennzeichnet, daß** die Hebel (10, 11) jeweils schwenkbar um einen Lagerpunkt (14a) gelagert sind, insbesondere wobei ein Antriebspunkt (14b) jeweils zwischen dem Lagerpunkt (14a) und einem Abtriebspunkt (14c) liegt, und/oder daß Antriebspunkte (14b) der Hebel (10, 11) auf entgegengesetzten Seiten der Betätigungsachse (V) des Ventils (9) angeordnet sind, und/oder daß bei Betätigung des Ventils (9) die Hebel (10, 11) in die gleiche oder entgegengesetzte Richtung verschwenkbar sind.

6. Ventilvorrichtung nach einem der voranstehenden Ansprüche, **dadurch gekennzeichnet, daß** die Hebel (10, 11) im wesentlichen parallel zueinander verlaufen und/oder übereinanderliegend angeordnet sind, und/oder daß die Hebel (10, 11) schwimmend gelagert sind und/oder daß das Ventil (9) bzw. dessen Ventilelement (16) in oder entgegen Einblaserichtung betätigbar, insbesondere öffenbar, ist.

7. Ventilvorrichtung nach einem der voranstehenden Ansprüche, **dadurch gekennzeichnet, daß** dem Ventil (9) eine Rückstelleinrichtung (19) zum Schließen oder Öffnen des Ventils (9) zugeordnet ist, gegen deren Rückstellkraft das Ventil (9) vom Aktuator (7) öffen- bzw. schließbar ist, und/oder daß dem Ventil (9) eine Einblasedüse nachgeordnet ist, und/oder daß der Öffnungsgrad des Ventils (9) bzw. der Hub des Ventilelements (16) insbesondere zur Steuerung der Einblasemenge und/oder Formung des Einblaseverlaufs variierbar ist.

8. Ventilvorrichtung nach einem der voranstehenden Ansprüche, **dadurch gekennzeichnet, daß** die Sensoreinrichtung (12) die Position oder den Hub des Ventilelements (16) zeitlich aufgelöst und/oder fortlaufend erfaßt und entsprechende Signale bereitstellt, und/oder daß die Ventilvorrichtung (1) eine Signalauswertung (20a) aufweist, die Signale der Sensoreinrichtung (12) aufbereitet und/oder insbesondere einer nachgeordneten Steuereinrichtung (20b) bereitstellt, insbesondere wobei die Signalaufbereitung (20a) in die Ventilvorrichtung (1) eingebaut ist, und/oder daß der Ventilvorrichtung (1) eine Steuereinrichtung (20b) zugeordnet ist, mittels derer der Aktuator (7) in Abhängigkeit von Signalen der Sensoreinrichtung (12) derart steuerbar oder regelbar ist, daß das Spiel zwischen dem Aktuator (7) und dem Ventil (9) oder dessen Ventilelement (16) bei geschlossenem oder nicht betätigtem Ventil (9) begrenzt oder minimiert wird.

9. Ventilvorrichtung nach einem der voranstehenden Ansprüche, **dadurch gekennzeichnet, daß** die Ventilvorrichtung (1) ein Gehäuse (21) zur Aufnahme und/oder Halterung des Aktuators (7), der Übersetzungseinrichtung (8), des Ventils (9), einer Rückstelleinrichtung (19), einer Einblasedüse, der Sensoreinrichtung (12) und/oder einer den Aktuator (7) steuernden Steuereinrichtung (20) aufweist, und/oder daß der Aktuator (7), insbesondere mittels einer Membran (22), gasdicht gegenüber dem Kraftstoff, vorzugsweise der Übersetzungseinrichtung (8), abgedichtet ist, insbesondere wobei die Membran (22) zwischen einem Stößel (15) des Aktuators (7) und der Übersetzungseinrichtung (8) eingebaut ist.

10. Verfahren zum direkten Einblasen von gasförmigem Kraftstoff in einen Verbrennungsraum (3) eines Verbrennungsmotors (2), wobei ein Aktuator (7) mittels einer den Hub des Aktuators (7) vergrößernden Übersetzungseinrichtung (8) ein Ventilelement (16) eines Ventils (9) gegen die Kraft einer Rückstelleinrichtung (19) betätigt, wobei die Position oder der Hub des Ventilelements (16) mittels einer dem Ventil (9) zugeordneten Sensoreinrichtung (12) erfaßt wird und der Aktuator (7) in Abhängigkeit von Signalen der Sensoreinrichtung (12) derart gesteuert oder geregelt wird, daß das Spiel zwischen dem Aktuator (7) und dem Ventilelement (16) oder der Übersetzungseinrichtung (8) bei unbetätigtem Ventil (9) begrenzt oder minimiert wird, wobei direkt das Einblasen bzw. der Strom des gasförmigen Kraftstoffs in den Verbrennungsraum (3) gesteuert wird.

11. Verfahren nach Anspruch 10, **dadurch gekennzeichnet, daß** in einem Einstellvorgang ausgehend von einem Zustand mit unbetätigtem oder geschlossenem Ventil (9) der Aktuator (7), insbesondere langsam oder schrittweise, zunehmend aktiviert oder sein Hub in Richtung zur Betätigung des Ventils (9) vergrößert wird, bis eine erste Betätigung des Ventils (9) erfaßt wird, und daß dann die Aktivierung des Aktuators (7) bzw. dessen Hub wieder um ein bestimmtes Maß zu einem Basiswert verringert wird, um das Spiel zwischen dem Aktuator (7) und dem Ventil (9) bei unbetätigtem oder geschlossenem Ventil (9) zu begrenzen oder zu minimieren.

12. Verfahren nach Anspruch 11, **dadurch gekennzeichnet, daß** der Basiswert für eine Ausgangseinstellung des Aktuators (7) bei nachfolgenden Einblasevorgängen verwendet wird, und/oder daß das Maß fest vorgegeben, von Betriebsparametern abhängig bzw. kennfeldgesteuert und/oder aus vorangehenden Werten bestimmt wird, und/oder daß der zukünftige Basiswert aus einem aktuell bestimmten Basiswert und aus vorangehenden Basiswerten, insbesondere von Betriebsparametern abhängig bzw. kennfeldgesteuert, bestimmt wird.

13. Verfahren nach Anspruch 11 oder 12, **dadurch gekennzeichnet, daß** der Einstellvorgang nach einer vorbestimmten Anzahl von Einblasevorgängen oder Motortakten und/oder bei nicht vollständiger Rückkehr des Ventils (9) in seinen unbetätigten oder geschlossenen Zustand wiederholt wird, und/oder daß die Basiswerte fortlaufend gespeichert und/oder zur Erfassung von Verschleiß ausgewertet werden.

14. Verwendung eines Federmittels (25) bei einer Ventilvorrichtung (1) zur Einblasung von gasförmigem Kraftstoff, wobei ein Aktuator (7) über eine den Hub des Aktuators (7) vergrößernde Übersetzungseinrichtung (8) ein Ventil (9) gegen die Kraft einer Rückstelleinrichtung (19) betätigt, wobei das Federmittel (25) der Übersetzungseinrichtung (8) oder einem Übertragungselement zwischen dem Aktuator (7) und der Übersetzungseinrichtung (8) derart zugeordnet ist und in Betätigungsrichtung wirkt, daß Spiel in der Übersetzungseinrichtung (8) und/oder zwischen Übersetzungseinrichtung (8) und dem Übertragungselement und/oder zwischen der Übersetzungseinrichtung (8) und dem Ventil (9) vermieden wird, wobei eine Ventilvorrichtung (1) gemäß einem der Ansprüche 1 bis 9 verwendet wird.

## Claims

1. A valve device (1) for a combustion engine (2) for injecting a gaseous fuel with an actuator (7), a transmission device (8) for increasing the travel of the actuator (7), and a valve (9) actuatable by the actuator (7) by means of the transmission device (8), wherein the valve (9) or its valve element (16) directly controls the injection or the flow of the gaseous fuel into an assigned combustion space (3) of the combustion engine (2), **characterized in that**
the transmission device (8) comprises at least two levers (10, 11), which are connected in series, in order to increase the travel of the actuator (7) for the actuation of the valve (9), and/or
the valve device (1) comprises a sensor device (12) assigned to a mobile valve element (16) of the valve (9), in order to detect the position or the travel of the valve element (16).

2. The valve device according to claim 1, **characterized in that** the actuator (7) operates electromagnetically, piezoelectrically or magnetostrictively, and/or that the active axis (A) of the actuator (7) runs parallel offset or coaxially to the actuation axis (V) of the valve (9) or obliquely or inclined to the actuation axis (V) of the valve (9).

3. The valve device according to any one of the preceding claims, **characterized in that** the transmission device (8) operates exclusively lever-mechanically and/or engages directly with the valve (9) or its valve element for its actuation and/or that the transmission device (8) has a transmission ratio greater than 5, in particular greater than 10 or 12, and/or that a spring means is prearranged or assigned to the transmission device (8), so that play can arise between the actuator (7) and the transmission device (8) or a transmission element arranged in between, but is avoided between the levers (10, 11) of the transmission device (8) or between the transmission device (8) and the valve (9).

4. The valve device according to any one of the preceding claims, **characterized in that** the levers (10, 11) are configured disc-shaped, elongated, plate-shaped, rod-shaped and/or rigid and/or have a high modulus of elasticity, and/or that the levers (10, 11) are produced from a light metal alloy, composite material and/or ceramic, and/or that at least one lever (10, 11) is coated at least in zones and/or is provided with a preferably ceramic or hard-metal insert (13) in order to minimize wear.

5. The valve device according to any one of the preceding claims, **characterized in that** the levers (10, 11) are each mounted capable of swivelling about a bearing point (14a), in particular wherein a drive point (14b) lies in each case between the bearing point (14a) and a drive point (14c), and/or the drive points (14b) of the levers (10, 11) are arranged on opposite sides of the actuation axis (V) of the valve (9), and/or that the levers (10, 11) can be swivelled in the same or opposite direction when the valve (9) is actuated.

6. The valve device according to any one of the preceding claims, **characterized in that** the levers (10, 11) run essentially parallel to one another and/or are arranged lying one above the other, and/or that the levers (10, 11) are mounted floating and/or that the valve (9) or its valve element (16) is actuatable, in particular openable, in or opposite the injection direction.

7. The valve device according to any one of the preceding claims, **characterized in that** there is assigned to the valve (9) a restoring device (19) for closing or opening the valve (9), against whose restoring force the valve (9) can be opened or closed by the actuator (7), and **in that** an injection nozzle is arranged downstream of the valve (9), and/or that the degree of opening of the valve (9) or the travel of the valve element (16) is variable particularly for controlling the injection quantity and/or the forming of the injection characteristic.

8. The valve device according to any one of the preceding claims, **characterized in that** the sensor device (12) detects the position or the travel of the valve element (16) in a time-resolved manner and/or continuously and makes available corresponding signals, and/or that the valve device (1) has a signal evaluation element (20a), which processes signals of the sensor device (12) and/or makes the latter available in particular to a downstream control device (20b), in particular wherein the signal processing element (20a) is incorporated into the valve device (1), and/or that there is assigned to the valve device (1) a control device (20b), by means of which the actuator (7) can be controlled or regulated in dependence on signals of the sensor device (12) in such a way that the play between the actuator (7) and the valve (9) or its valve element (16) is limited or minimized when the valve (9) is closed or not actuated.

9. The valve device according to any one of the preceding claims, **characterized in that** the valve device (1) has a housing (21) for accommodating and/or holding the actuator (7), the transmission device (8), the valve (9), a restoring device (19), an injection nozzle, the sensor device (12) and/or the control device (20) controlling the actuator (7), and/or that the actuator (7) is sealed off gas-tight, in particular by means of a membrane (22), with respect to the fuel, preferably the transmission device (8), in particular wherein the membrane (22) is incorporated between a push-rod (15) of the actuator (7) and the transmission device (8).

10. A method for the direct injection of gaseous fuel into a combustion space (3) of a combustion engine (2), wherein an actuator (7) actuates a valve element (16) of a valve (9) against the force of a restoring device (19) by means of a transmission device (8) which increases the travel of the actuator (7), wherein the position or the travel of the valve element (16) is detected by means of a sensor device (12) assigned to the valve (9) and the actuator (7) is controlled or regulated in dependence on signals of the sensor device (12) in such a way that play between the actuator (7) and the valve element (16) or the transmission device (8) is limited or minimized in the presence of an non-actuated valve (9), wherein the injection or the flow of the gaseous fuel into the combustion space (3) is controlled directly.

11. The method according to claim 10, **characterized in that**, in an adjustment process proceeding from a state with a non-actuated or closed valve (9), the actuator (7) is increasingly activated, in particular slowly or stepwise, or its travel is increased in the direction for the actuation of the valve (9), until a first actuation of the valve (9) is detected, and that the activation of the actuator (7) or its travel is then reduced again by a certain amount to a basic value, in order to limit or minimize the play between the actuator (7) and the valve (9) in the presence of a non-actuated or closed valve (9).

12. The method according to claim 11, **characterized in that** the basic value for an initial adjustment of the actuator (7) is used in subsequent injection operations, and/or that the amount is preset as fixed, determined depending on operating parameters or controlled by the characteristics map and/or from preceding values, and/or that the future basic value is determined from a currently determined basic value and from preceding basic values, in particular depending on operating parameters or controlled by the characteristics map.

13. The method according to claim 11 or 12, **characterized in that** the adjustment process is repeated after a predetermined number of injection processes or engine cycles and/or when the valve (9) is not completely returned into its non-actuated or closed state, and/or that the basic values are continuously stored and/or evaluated for the detection of wear.

14. Use a spring means (25) with a valve device (1) for injecting gaseous fuel, wherein an actuator (7) actuates a valve (9) against the force of a restoring device (19) via a transmission device (8) increasing the travel of the actuator (7), wherein the spring means (25) is assigned to the transmission device (8) or a transmission element between the actuator (7) and the transmission device (8) and acts in the actuation direction in such a way that play in the transmission device (8) and/or between the transmission device (8) and the transmission element and/or between the transmission device (8) and the valve (9) is avoided, wherein a valve device (1) according to any one of claims 1 to 9 is used.

## Revendications

1. Dispositif (1) faisant office de soupape pour un moteur à combustion interne (2) à des fins d'injection d'un carburant gazeux, comprenant un actionneur (7), un dispositif de démultiplication (8) pour augmenter la course de l'actionneur (7) et une soupape (9) qui peut être actionnée par l'actionneur (7) au moyen du dispositif de démultiplication (8), la soupape (9), respectivement son élément (16) faisant office de soupape, commandant directement l'injection, respectivement le courant du carburant gazeux dans une chambre de combustion correspondante (3) du moteur à combustion interne (2), **caractérisé en ce que** le dispositif de démultiplication (8) comprend au moins deux leviers (10, 11) qui sont montés en série pour augmenter la course de l'actionneur (7) dans le but d'actionner la soupape (9) et/ou **en ce que** le dispositif (1) faisant office de soupape présente un dispositif (12) faisant office de capteur attribué à un élément mobile (16) faisant office de soupape de la soupape (9) pour enregistrer la position ou la course de l'élément (16) faisant office de soupape.

2. Dispositif faisant office de soupape selon la revendication 1, **caractérisé en ce que** l'actionneur (7) travaille dans le mode électromagnétique, piézo-électrique ou magnétostrictif et/ou **en ce que** l'axe actif (A) de l'actionneur (7) s'étend parallèlement en décalage ou en position coaxiale par rapport à l'axe d'actionnement (V) de la soupape (9) ou bien transversalement ou en inclinaison par rapport à l'axe d'actionnement (V) de la soupape (9).

3. Dispositif faisant office de soupape selon l'une quelconque des revendications précédentes, **caractérisé en ce que** le dispositif de démultiplication (8) travaille exclusivement de manière mécanique à l'aide d'un levier et/ou agit directement sur la soupape (9), respectivement sur l'élément de cette dernière faisant office de soupape, pour son actionnement, et/ou **en ce que** le dispositif de démultiplication (8) présente un rapport de démultiplication supérieur à 5, en particulier supérieur à 10 ou 12, et **en ce qu'**un moyen de ressort est disposé en amont ou en aval du dispositif de démultiplication (8), si bien que du jeu peut se manifester entre l'actionneur (7) et le dispositif de démultiplication (8) ou à un élément de démultiplication disposé en position intermédiaire, un tel jeu étant néanmoins supprimé entre les leviers (10, 11) du dispositif de démultiplication (8) ou entre le dispositif de démultiplication (8) et la soupape (9).

4. Dispositif faisant office de soupape selon l'une quelconque des revendications précédentes, **caractérisé en ce que** les leviers (10, 11) sont réalisés en forme de disques, sous forme longitudinale, en forme de plaques, en forme de barres et/ou de manière rigide et/ou présentent un module d'élasticité élevé, et/ou **en ce que** les leviers (10, 11) sont réalisés en un alliage de métaux légers, en un matériau composite et/ou en céramique, et/ou **en ce qu'**au moins un levier (10, 11) est recouvert, au moins dans certaines zones, afin de minimiser l'usure et/ou est muni d'une pièce rapportée de préférence en céramique ou en métal dur (13).

5. Dispositif faisant office de soupape selon l'une quelconque des revendications précédentes, **caractérisé en ce que** les leviers (10, 11) sont montés respectivement en pivotant autour d'un point de pivot (14a), en particulier dans lequel un point d'entraînement (14b) est disposé respectivement entre le point de pivot (14a) et un point de sortie (14c), et/ou **en ce que** des points d'entraînement (14b) des leviers (10, 11) sont disposés sur des côtés opposés de l'axe d'actionnement (V) de la soupape (9), et/ou **en ce que**, lors de l'actionnement de la soupape (9), les leviers (10, 11) sont en mesure de pivoter dans la même direction ou dans des directions opposées.

6. Dispositif faisant office de soupape selon l'une quelconque des revendications précédentes, **caractérisé en ce que** les leviers (10, 11) s'étendent essentiellement parallèlement l'un à l'autre, et/ou **en ce que** les leviers (10, 11) sont montés en flottement ; et/ou **en ce que** la soupape (9), respectivement son élément (16) faisant office de soupape, peut être actionnée, en particulier peut s'ouvrir dans la direction d'injection ou dans la direction opposée à cette dernière.

7. Dispositif faisant office de soupape selon l'une quelconque des revendications précédentes, **caractérisé en ce qu'**un dispositif de rappel (19) pour la fermeture ou l'ouverture de la soupape (9) est attribué à la soupape (9), la soupape (9) étant à même de s'ouvrir, respectivement de se fermer sous l'effet de l'actionneur (7) à l'encontre de cette force de rappel, et/ou **en ce qu'**un injecteur est monté en aval de la soupape (9), et/ou **en ce qu'**on peut faire varier le degré d'ouverture de la soupape (9), respectivement de la course de l'élément (16) faisant office de soupape, en particulier pour la commande de la quantité d'injection et/ou la configuration de l'allure de l'injection.

8. Dispositif faisant office de soupape selon l'une quelconque des revendications précédentes, **caractérisé en ce que** le dispositif (12) faisant office de capteur détecte dans le temps la position ou la course de l'élément (16) faisant office de soupape ou bien l'enregistre en continu et fournit des signaux correspondants, et/ou **en ce que** le dispositif (1) faisant office de soupape présente une évaluation de signaux (20a), traite les signaux du dispositif (12) faisant office de capteur et/ou en particulier les fournit à un dispositif de commande (20b) monté à la suite, en particulier dans lequel le traitement de signaux (20a) est incorporé dans le dispositif (1) faisant office de soupape, et/ou **en ce qu'**un dispositif de commande (20b) est attribué au dispositif (1) faisant office de soupape, dispositif à l'aide duquel l'actionneur (7) peut être commandé ou réglé, en fonction des signaux du dispositif (12) faisant office de capteur de telle sorte que l'on limite ou que l'on minimise le jeu entre l'actionneur (7) et la soupape (9) ou son élément (16) faisant office de soupape lorsque la soupape (9) est fermée ou est à l'état de repos.

9. Dispositif faisant office de soupape selon l'une quelconque des revendications précédentes, **caractérisé en ce que** le dispositif (1) faisant office de soupape présente un boîtier (21) pour la réception et/ou le support de l'actionneur (7), du dispositif de démultiplication (8), de la soupape (9), d'un dispositif de rappel (19), d'un injecteur, du dispositif (12) faisant office de capteur et/ou d'un dispositif de commande qui commande l'actionneur (7), et/ou **en ce que** l'actionneur (7) a été rendu étanche aux gaz, vis-à-vis du carburant, en particulier au moyen d'une membrane, de préférence du dispositif de démultiplication (8), en particulier dans lequel la membrane (22) vient s'insérer entre un poussoir (15) de l'actionneur (7) et le dispositif de démultiplication (8).

10. Procédé pour l'injection directe d'un carburant gazeux dans une chambre de combustion (3) d'un moteur à combustion interne (2), dans lequel un actionneur (7) actionne, au moyen d'un dispositif de démultiplication (8) qui augmente la course de l'actionneur, un élément (16) faisant office de soupape d'une soupape (9) à l'encontre de la force de dispositif de rappel (19), la position ou la course de l'élément (16) faisant office de soupape étant enregistrée au moyen d'un dispositif (12) faisant office de capteur attribué à la soupape, et dans lequel l'actionneur (7) est commandé ou réglé en fonction des signaux du dispositif (12) faisant office de capteur de telle sorte que l'on limite ou que l'on minimise le jeu entre l'actionneur (7) et la soupape (9) ou son élément (16) faisant office de soupape lorsque la soupape (9) est fermée ou est à l'état de repos, l'injection, respectivement le courant du carburant gazeux étant guidé directement dans la chambre de combustion (3).

11. Procédé selon la revendication 10, **caractérisé en ce que**, dans un processus de réglage, à partir d'un état dans lequel la soupape (9) est à l'état de repos ou est fermée, l'actionneur (7) est activé progressivement, en particulier lentement ou pas à pas ou bien sa course est soumise à une augmentation dans la direction orientée vers l'actionnement de la soupape (9), jusqu'à ce que l'on enregistre un premier actionnement de la soupape (9), et **en ce qu'**ensuite, l'activation de l'actionneur (7), respectivement de la course de ce dernier, est de nouveau diminuée d'une mesure déterminée jusqu'à une valeur de base afin de limiter ou de minimiser le jeu entre l'actionneur (7) et la soupape (9) lorsque la soupape (9) est fermée ou est à l'état de repos.

12. Procédé selon la revendication 11, **caractérisé en ce que** la valeur de base pour un réglage de départ de l'actionneur (7) est utilisée lors des processus d'injection suivants, et/ou **en ce que** la mesure est prédéfinie de manière fixe, et réglée en fonction de paramètres d'actionnement, respectivement en fonction de la définition des réseaux de caractéristiques d'actionnement et/ou est déterminée à partir de valeurs précédentes, et/ou **en ce que** la valeur de base future est déterminée à partir d'une valeur de base déterminée actuellement et à partir de valeurs de base précédentes, en particulier est réglée en fonction de paramètres d'actionnement, respectivement en fonction de la définition des réseaux de caractéristiques d'actionnement.

13. Procédé selon la revendication 11 ou 12, **caractérisé en ce que** le processus de réglage est répété après un nombre prédéterminé de processus d'injection ou de cycles de moteur et/ou dans le cas d'un retour incomplet de la soupape (9) à son état de repos ou fermé, et/ou **en ce que** les valeurs de base sont mémorisées en continu et/ou sont évaluées pour analyser l'usure.

14. Utilisation d'un moyen (25) faisant office de ressort dans un dispositif (1) faisant office de soupape pour l'injection d'un carburant gazeux, dans lequel un actionneur (7) actionne, au moyen d'un dispositif de démultiplication (8) qui augmente la course de l'actionneur, une soupape (9) à l'encontre de la force de dispositif de rappel (19), le moyen (25) faisant office de ressort étant attribué au dispositif de démultiplication (8) ou à un élément de démultiplication entre l'actionneur (7) et le dispositif de démultiplication (8) de telle sorte que l'on supprime le jeu dans le dispositif de démultiplication (8) et/ou entre le dispositif de démultiplication (8) et l'élément de démultiplication et/ou entre le dispositif de démultiplication (8) et la soupape (9), un dispositif (1) faisant office de soupape selon l'une quelconque des revendications 1 à 9 étant utilisé.
